# EUROPEAN PATENT APPLICATION

(11) **EP 2 337 182 A2**
(43) Date of publication of application: **22.06.2011**
(21) Application number: 10015700.7
(22) Date of filing: 15.12.2010
(51) Int. Cl.: H02J 7/00

(54) **Power supply device capable of forcedly discharging battery cell**

(30) Priority: 16.12.2009 JP 2009284971
(71) Applicant: Sanyo Electric Co., Ltd., Osaka 570-8677 (JP)
(72) Inventor: Tamezane, Shigeto, Osaka 570-8677 (JP); Furukawa, Kimihiko, Osaka 570-8677 (JP); Yanai, Atsushi, Osaka 570-8677 (JP)
(74) Representative: Hertz, Oliver

(57) **Abstract**

A power supply device is provided that includes a battery pack 10, and forcedly discharging circuits 20. The battery pack 10 includes serially-connected rechargeable battery cells 2. The forcedly discharging circuits 20 are connected to the battery cells 2 in parallel so that, when a cell voltage of a battery cell is becomes higher than a predetermined voltage, this battery cell is forcedly discharged. The forcedly discharging circuits 20 are composed of analog circuits. When a cell voltage of a battery cell exceeds the predetermined voltage, one of the forcedly discharging circuits 20 corresponding to this battery cell forcedly discharges this battery cell. Since forcedly discharging circuit 20 is not composed of controlling software but is physically composed of an analog circuit, the forcedly discharging circuit can stably operate without malfunction caused by noise. A power supply device can be provided that includes a protection circuit with improved reliability.

## Description

### BACKGROUND OF THE INVENTION

### 1. Field of the Invention

The present invention relates to a power supply device to be used for vehicles and the like that includes a number of battery cells serially connected to each other for increasing output voltage.

### 2. Description of the Related Art

Power supply devices to be used for vehicles and the like include a number of battery cells serially connected to each other for increasing output voltage. In such power supply devices, the serially-connected battery cells are charged at the same charging current, and are discharged at the same discharging current. For this reason, if all the battery cells have the completely same properties, their battery voltages and remaining capacities will not be unbalanced.

However, practically, battery cells with completely the same properties cannot be manufactured. The unbalance among the battery cells causes unbalanced voltages and remaining capacities in repeated charging/discharging operation cycles. In addition, if the battery cells have unbalanced battery voltages, a particular battery cell may be over-charged/over-discharged. A power supply device has been developed, in order to prevent this problem, detects voltages of battery cells for equalizing the voltage difference among the battery cells (Japanese Patent Laid-Open Publication No. 2007-300701).

As shown in Fig. 13A, a power supply device 300 disclosed in JP 2007-300701-A detects voltages of battery cells 302. The power supply device 300 compares the detected voltages to obtain the battery difference. Base on the battery difference, a battery cell among the battery cell 302 with high voltage is determined and is discharged for equalizing voltages of the battery cells. This power supply device sequentially detects cell voltages of the battery cells 302 by using a multiplexer 344. After the detected cell voltages are compared, a battery cell among the battery cells 302 with higher voltage is determined. A switching element 323 of a discharging circuit 320 connected to the higher voltage battery cell is turned ON so that the higher voltage battery cell is discharged. In order to detect a number of cell voltages and select a higher voltage battery from the battery cell 302 based on the detected voltages, an equalization circuit 340 is provided that includes a microcomputer 326. The detected voltages of the battery cells 302 are converted into digital signals by an A/D converter 327 so that the microcomputer 326 can execute calculation. The microcomputer 326 calculates the cell voltages based on the digital signals provided from the A/D converter, and determines a battery cell with large voltage difference among the battery cell 302. After that, the microcomputer 326 turns the switching element 323 connected to the battery cell with large voltage difference so that this battery cell is discharged though a discharging resistor 324.

The microcomputer 326 stores a firmware, and calculates the cell voltages based on the firmware. The equalization circuit 340 equalizes voltages of the battery cells 302 when operating normally. However, the microcomputer, which operates based on the firmware, may be affected by noise from the outside or other noise and may run way out of control. Also, since the equalization circuit is composed of complicated input circuits and digital circuits, the equalization circuit may malfunction. In case where the equalization circuit malfunctions, voltages of the battery cells can not be equalized. If the battery cells are not properly brought in an equalized condition, a particular battery cell will have an abnormally high voltage. This may cause a problem in that the battery cells cannot be safely charged.

In particular, most power supply devices have an over-charge preventing circuit that detects an overcharged state in battery cells. In such an over-charge preventing circuit, if an abnormal voltage is detected in a battery cell, a contactor will be opened to interrupt a current, alternatively, a CID (Current Interrupt Device) included in the battery cell will interrupt a current. However, in this case, since a circuit is only interrupted, there is a problem in that the battery cell in the overcharged state still stores electric power energy. In order to avoid this state, it is conceivable that the aforementioned equalization circuit is used to discharge the electric power energy stored in the battery cell. However, as discussed above, the firmware for operation of the equalization circuit may improperly function. This may cause reliability reduction. For this reason, more reliable protection function is desired.

The present invention has been developed for solving the problem. It is an important object of the present invention to provide a power supply device that can reliably prevent abnormal cell voltage increase of battery cells whereby safely charging the battery cells.

### SUMMARY OF THE INVENTION

To achieve the above object, a power supply device according to a first aspect of the present invention includes a battery pack, and forcedly discharging circuits. The battery pack includes a plurality of rechargeable battery cells that are serially connected to each other. The forcedly discharging circuits are connected to the battery cells in parallel so that, when a cell voltage of a battery cell among the battery cells becomes higher than a predetermined voltage, this battery cell is forcedly discharged. The forcedly discharging circuits are composed of analog circuits. When a cell voltage of a battery cell becomes higher than the predetermined voltage, one of the forcedly discharging circuits corresponding to this battery cell forcedly discharges this battery cell. According to this construction, since the forcedly discharging circuit is not composed of controlling software but is physically composed of an analog circuit, the forcedly discharging circuit can stably operate without malfunction caused by noise. Therefore, it is possible to provide a power supply device that includes a protection circuit with improved reliability.

In a power supply device according to a second aspect of the present invention, each of the forcedly discharging circuits can include a series connection circuit, and a control circuit. The series connection circuit includes a discharging switch and a discharging resistor that are serially connected to each other. The control circuit detects a cell voltage of corresponding one of the battery cells. When a cell voltage of the corresponding one of the battery cells becomes higher than the predetermined voltage, the control circuit turns the discharging switch of the series connection circuit ON. The series connection circuit is connected to the corresponding one of the battery cells in parallel. When a cell voltage of the corresponding one of the battery cells, which is connected to the series connection circuit in parallel, becomes higher than the predetermined voltage, the control circuit turns the discharging switch ON and forcedly discharges the corresponding one of the battery cells the cell voltage of which becomes higher than the predetermined voltage. According to this construction, the control circuit can monitor a cell voltage of a battery cell, and the series connection circuit can discharge the battery cell. Therefore, reliable operation is expected.

In a power supply device according to a third aspect of the present invention, the control circuit can include a comparing circuit that compares a cell voltage of the corresponding one of the battery cells with a reference voltage. When a cell voltage of the corresponding one of the battery cells becomes higher than the predetermined voltage, the comparing circuit can turn the discharging switch ON. According to this construction, it is possible to reliably monitor abnormalities in voltage of a battery cell by using the comparing circuit.

In a power supply device according to a fourth aspect of the present invention, the comparing circuit can include a determining portion that specifies a predetermined regulation voltage. The comparing circuit can compare the predetermined regulation voltage of the determining portion with a voltage relating to a cell voltage of the corresponding one of the battery cells. When this cell voltage of becomes higher than the reference voltage of the determining portion, and the comparing circuit provides a signal for turning the discharging switch ON. According to this construction, the comparing circuit can be easily realized by the determining portion.

In a power supply device according to a fifth aspect of the present invention, the voltage relating to a cell voltage can be a voltage obtained by dividing this cell voltage by voltage dividing resistors.

In a power supply device according to a sixth aspect of the present invention, the determining portion can be a shunt regulator or a Zener diode. According to this construction, cell voltages can be easily limited to a predetermined voltage value by discrete elements such as shunt regulator and Zener diode.

In a power supply device according to a seventh aspect of the present invention, the determining portion can include a differential amplifier, and a reference power supply. The differential amplifier has first and second input terminals. The reference power supply is connected to the first input terminal of the differential amplifier. The differential amplifier can apply the voltage relating to a cell voltage to the second input terminal. When the voltage relating to a cell voltage becomes higher than the predetermined regulation voltage, the differential amplifier can provide the signal for turning the discharging switch ON. According to this construction, cell voltages can be easily limited to a predetermined by the differential amplifiers.

In a power supply device according to an eight aspect of the present invention, the power supply device can further include forced-discharge informing portions that provide forced discharging operating states of the forcedly discharging circuits. According to this construction, since the operating state of the discharging switch can be externally provided, the power supply device or an external device can be informed of abnormalities in voltage of the battery cells.

In a power supply device according to a ninth aspect of the present invention, the forced-discharge informing portion can be composed of a photocoupler. A light emitting diode of the photocoupler can be serially connected to the discharging switch. When the discharging switch is turned ON, the photocoupler can provide an ON signal. According to this construction, the ON signal of the discharging switch can be externally and insulatedly provided by the photocoupler.

In a power supply device according to a tenth aspect of the present invention, when a cell voltage of a battery cell becomes higher than the predetermined voltage, one of the forcedly discharging circuits corresponding to this battery cell can start forcedly discharging this battery cell. When a cell voltage of this battery cell decreases to a voltage lower than a second predetermined voltage, the one of the forcedly discharging circuits corresponding to this battery cell can stop discharging this battery cell. According to this construction, the forcedly discharging circuit forcedly discharges a battery cell if a voltage of the battery cell is abnormal, and can stops forcedly discharging the battery cell to recover a system powered by this battery supply device when a voltage of the battery cell decreases to a safe voltage.

In a power supply device according to an eleventh aspect of the present invention, each of the battery cells can include a current interception portion that interrupts a current when its cell battery becomes higher than the predetermined voltage. The predetermined voltage at which the discharging switch of the forcedly discharging circuit is turned ON can be lower than the predetermined voltage at which the current interception portion interrupts a current. According to this construction, a forcedly discharging circuit corresponding to a battery cell capable of recovering can operate before the current interception portion such as CID operates. Thus, in the case where a cell voltage of a battery recovers to a normal voltage, the battery cell can operate again. Therefore, in this case, the power supply device can be used again.

In a power supply device according to a twelfth aspect of the present invention, an equalization circuit can be included that detects the voltage difference among the battery cells, and equalizes voltages of the battery cells. The equalization circuit can control the discharging switches of the series connection circuits for equalizing voltages of the battery cells. According to this construction, the equalization circuit and the forcedly discharging circuit can be commonly constructed. Therefore, the common circuit can serve to equalize voltages of the battery cells and to forcedly discharge a battery cell the cell voltage of which rises.

In a power supply device according to a thirteenth aspect of the present invention, the forcedly discharging circuits can be analog circuits composed of discrete elements. According to this construction, it is possible to provide a highly robust high power supply device with noise resistance and the like independent of software operation.

The above and further objects of the present invention as well as the features thereof will become more apparent from the following detailed description to be made in conjunction with the accompanying drawings.

### BRIEF DESCRIPTION OF THE DRAWINGS

Fig. 1 is a block diagram showing a power supply device according to one embodiment of the present invention;
Fig. 2 is a circuit diagram showing a forcedly discharging circuit;
Fig. 3 is a graph showing operation of the forcedly discharging circuit shown in Fig. 2;
Fig. 4 is a circuit diagram showing a forcedly discharging circuit according to a modified embodiment;
Fig. 5 is a circuit diagram showing a forcedly discharging circuit according to another modified embodiment;
Fig. 6 is a circuit diagram showing a forcedly discharging circuit that includes a forced-discharge informing portion;
Fig. 7 is a block diagram showing a power supply device that includes the forced-discharge informing portion shown in Fig. 6;
Fig. 8 is a block diagram showing an equalization circuit and a plurality of forcedly discharging circuits of battery cells that are connected to each other;
Fig. 9 is a circuit diagram showing an equalization circuit and a forcedly discharging circuit that includes a series connection circuit of the battery cell connected to the equalization circuit;
Fig. 10 is a block diagram showing a power supply device that includes an equalization circuit;
Fig. 11 is a block diagram showing an exemplary hybrid car that is driven by an engine and an electric motor, and includes the power supply device;
Fig. 12 is a block diagram showing an exemplary electric vehicle that is driven only by an electric motor, and includes the power supply device; and

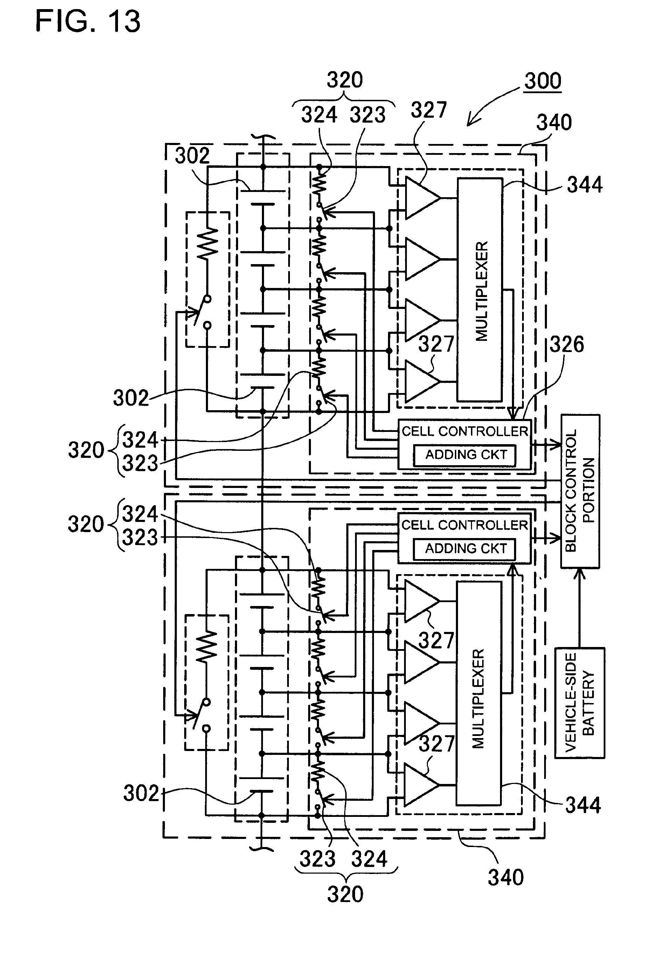

Fig. 13 is a circuit diagram showing a power supply device that detects voltages of battery cells, and equalizes voltages of the battery cells.

### DETAILED DESCRIPTION OF THE EMBODIMENT(S)

The following description will describe embodiments according to the present invention with reference to the drawings.

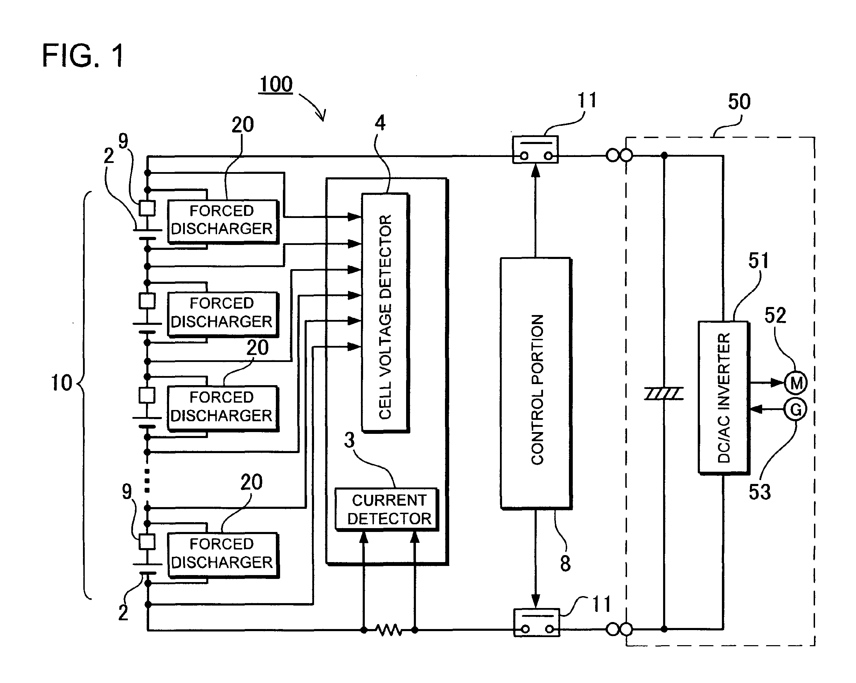

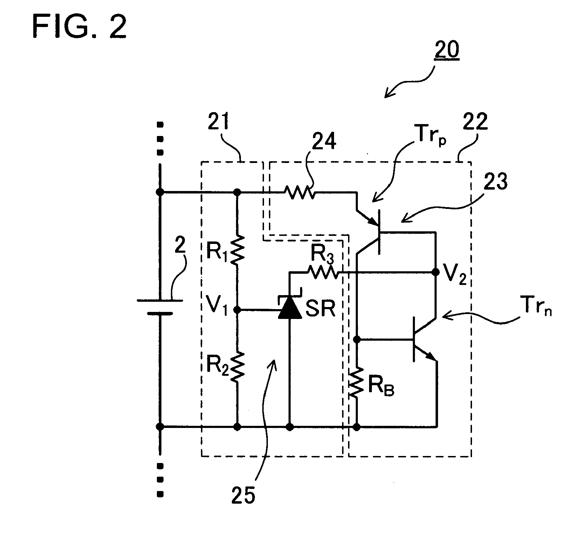

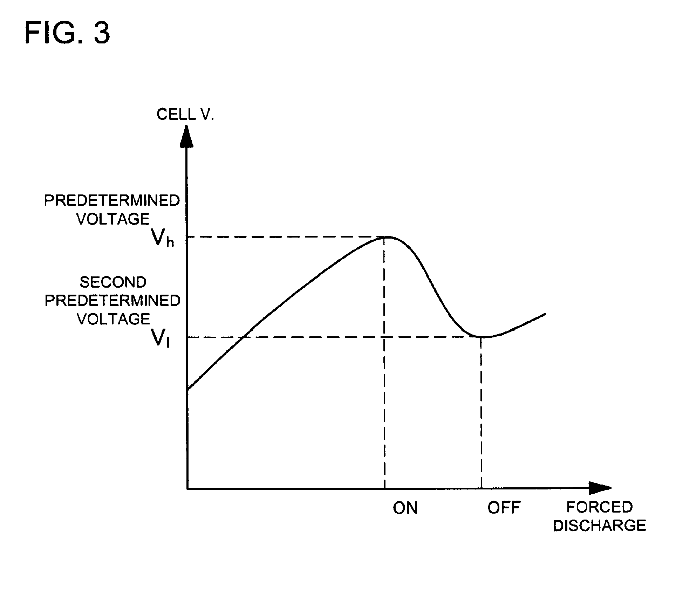

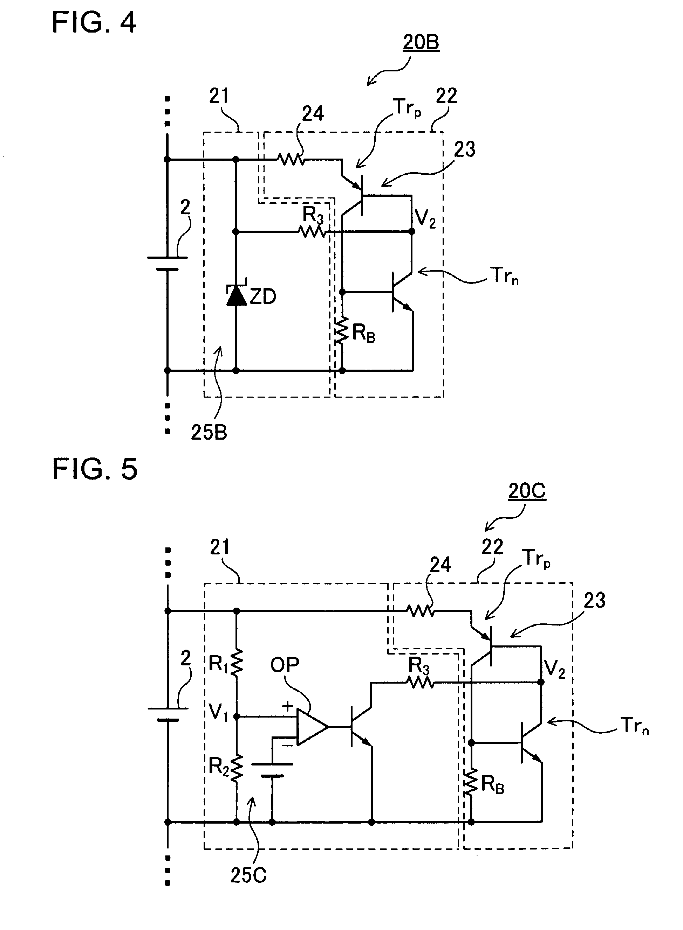

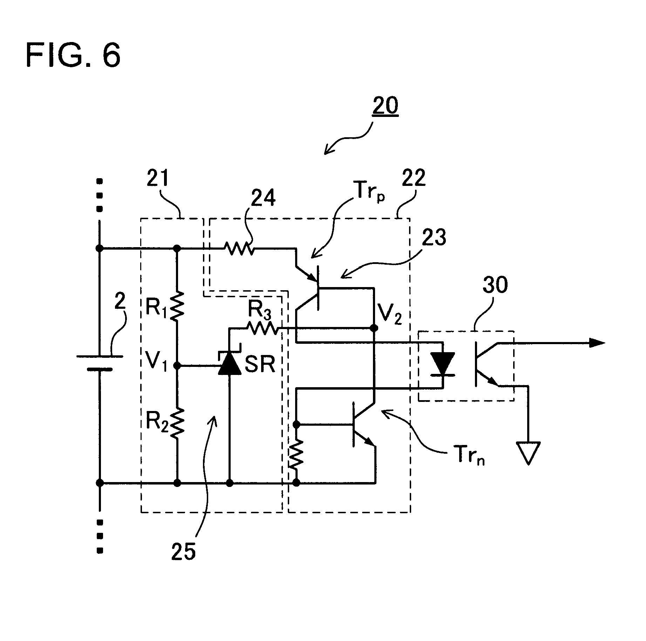

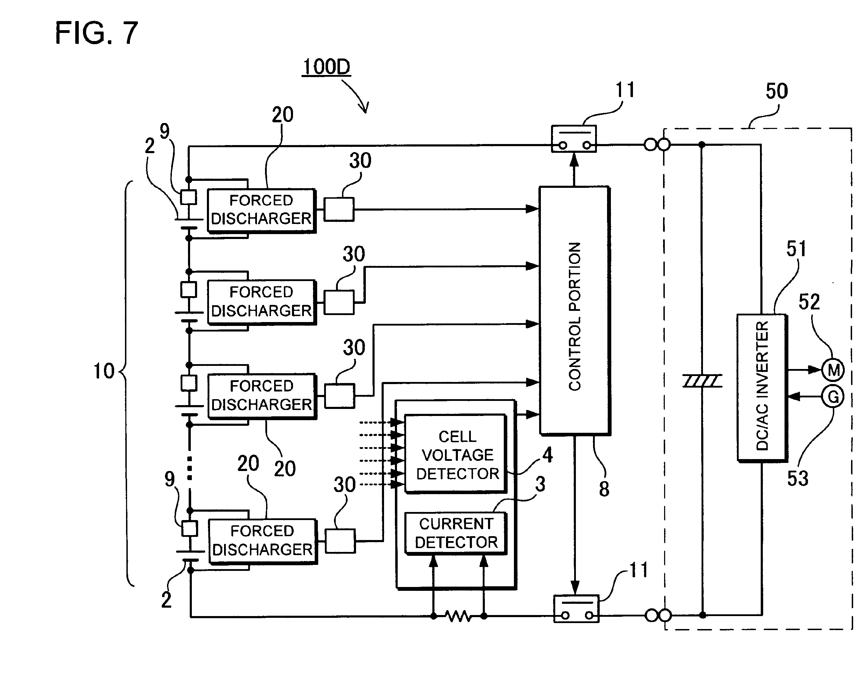

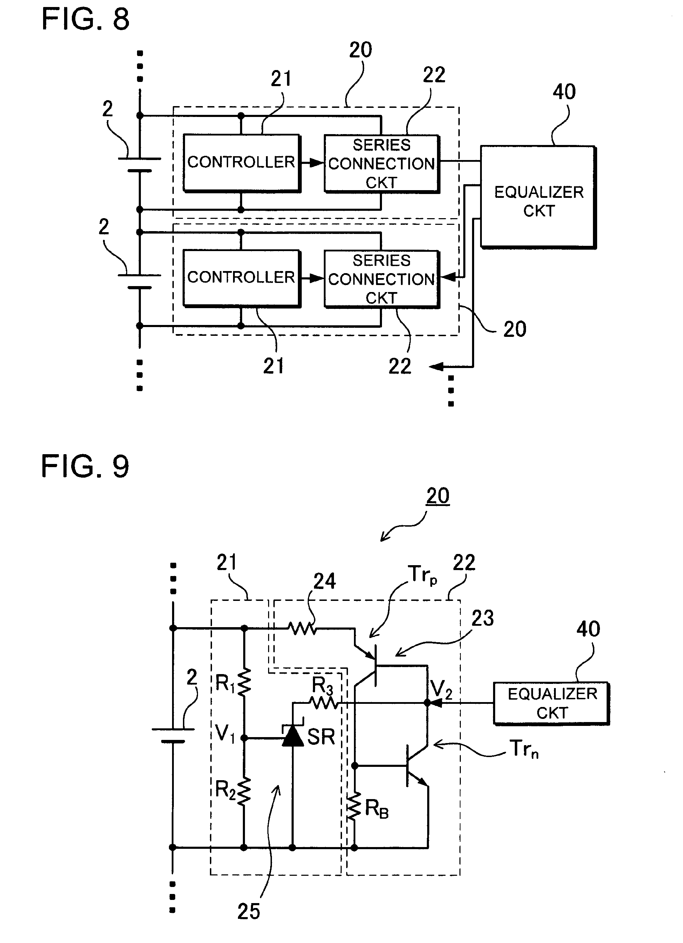

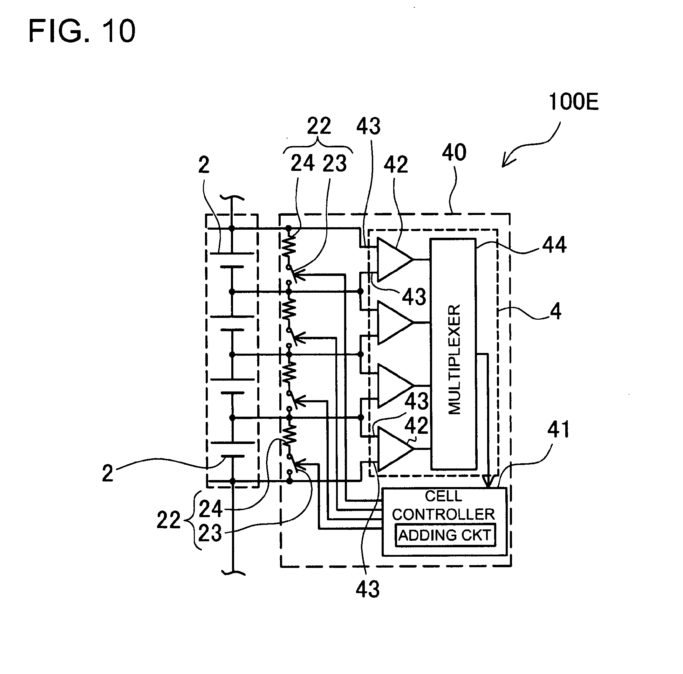

The following description will describe power supply devices according to embodiments of the present invention with reference to Figs. 1 to 10. In these embodiments, the present invention is applied to vehicle power supply devices. Fig. 1 is a block diagram showing the power supply device. Fig. 2 is a circuit diagram showing a forcedly discharging circuit. Fig. 3 is a graph showing operation of the forcedly discharging circuit shown in Fig. 2. Fig. 4 is a circuit diagram showing a forcedly discharging circuit according to a modified embodiment. Fig. 5 is a circuit diagram showing a forcedly discharging circuit according to another modified embodiment. Fig. 6 is a circuit diagram showing a forcedly discharging circuit that includes a forced-discharge informing portion. Fig. 7 is a block diagram showing a power supply device that includes the forced-discharge informing portion shown in Fig. 6. Fig. 8 is a block diagram showing an equalization circuit and a plurality of forcedly discharging circuits of battery cells that are connected to each other. Fig. 9 is a block diagram showing an equalization circuit and a forcedly discharging circuit that includes a series connection circuit of the battery cell connected to the equalization circuit. Fig. 10 is a block diagram showing a power supply device that includes an equalization circuit. The power supply device 100 shown in these Figures is suitable mainly for power supplies of electric vehicles such as hybrid cars that are driven by both an engine and a motor, and electric vehicles that are driven only by a motor. However, the power supply device according to the present invention can be used for vehicles other than hybrid cars or electric vehicles, and can be also used for applications other than electric vehicle that require high power.

The vehicle power supply device 100 shown in Fig. 1 is installed in a vehicle such as hybrid car, fuel-cell vehicle and electric vehicle, and is connected to an electric motor 52 in a vehicle load 50. The electric motor 52 is powered by the vehicle power supply device 100, and drives the vehicle. As shown in Fig. 1, the vehicle load 50 includes a DC/AC inverter 51, the electric motor 52 and an electric generator 53. The DC/AC inverter 51 is connected on the input side. The electric motor 52 and the electric generator 53 are connected on the output side. The DC/AC inverter 51 converts direct current from a vehicle-driving battery 1 into three-phase alternating current, and controls power supplied to the electric motor 52. In addition, the DC/AC inverter 51 converts output from the electric generator 53 into direct current so that the vehicle-driving battery 1 of the power supply device 100 is charged.

A vehicle load can be used that includes a buck-boost converter connected on the input side of the DC/AC inverter. This buck-boost converter boosts the output voltage of the power supply device, and provides the boosted voltage to the electric motor. In this vehicle load, the output voltage of the power supply device is boosted by buck-boost converter, and is provided to the electric motor via the DC/AC inverter, while the output from the electric generator is converted into direct current by the DC/AC inverter, and is reduced in voltage by the buck-boost converter to charge the battery.

The vehicle power supply device 100 shown in Fig. 1 includes a battery pack 10, a current detecting circuit 3, a cell voltage detecting circuit 4, a control portion 8, and contactors 11. The battery pack 10 supplies electric power to the electric motor 52 of the vehicle load 50. The current detecting circuit 3 detects a current of the battery pack 10. The cell voltage detecting circuit 4 detects voltages of battery cells 2. The control portion 8 monitors a current and voltage of the battery cell 2 based on the detection voltage detected by the cell voltage detecting circuit 4 and the detection current detected by the current detecting circuit 3, and controls operation including ON/OFF of charging/discharging operation. The contactor 11 is opened/closed by the control portion.

### (Contactor 11)

The contactors 11 are connected on the positive and negative output sides of the battery pack 10. The contactors 11 are ON, when the vehicle is in operation, in other words, when the ignition switch of the vehicle is turned ON. The contactors 11 are OFF, when the vehicle is not in operation. Although the contactors 11 are connected on the positive and negative output sides of the battery pack 10 in the power supply device 100 of Fig. 1, only one contactor may be connected on the positive or negative output side.

### (Battery Pack 10)

The battery pack 10 powers the electric motor 52 for driving the vehicle via the DC/AC inverter 51. In order to supply a large amount of electric power to the electric motor 52, the battery pack 10 includes a plurality of the battery cells 2 serially connected to each other. Thus, the output voltage of the battery pack 10 can be high. Nickel-hydrogen batteries or lithium-ion rechargeable batteries can be used as the battery cells 2. However, any rechargeable batteries including nickel-cadmium rechargeable batteries may be as the battery.

### (CID 9)

The battery cell 2 shown in Fig. 1 includes a CID 9 as a current interception portion for cutting off a current when the battery cell 2 is in an abnormal state. The CID 9 means a current interruption device. If a battery cell 2 is brought into an abnormal state such as over-current discharged state or over-current charged state, the CID 9 is operated by the abnormal battery voltage, and interrupts the current so that this battery cell 2 is out of use. Although the CID 9 is illustrated outside the battery cell 2 in Fig. 1 for ease of illustration, typically, the CID is included in the battery cell. However, the current interception portion such as CID may be constructed separately from the battery cell as external device.

### (Forcedly Discharging Circuit 20)

The power supply device 100 shown in Fig. 1 includes a forcedly discharging circuit 20 composed of hardware. The forcedly discharging circuit 20 determines whether a cell voltage of a battery cell 2 becomes higher than a predetermined voltage, and forcedly discharges the battery cell when determining that a cell voltage of the battery cell 2 becomes higher than the predetermined voltage. The forcedly discharging circuit 20 is connected to each of the battery cells 2 in parallel. Fig. 2 shows exemplary construction of the forcedly discharging circuit 20. This illustrated forcedly discharging circuit 20 is composed of a series connection circuit 22, and a control circuit 21. The series connection circuit 22 forcedly discharges the battery cell 2. The control circuit 21 controls the series connection circuit 22. Thus, the series connection circuit 22 starts/stops forcedly discharging the battery cell 2 based on the control of the control circuit 21.

### (Series Connection Circuit 22)

The series connection circuit 22 includes a discharging switch 23 and a discharging resistor 24 serially connected to each other. An example of the discharging resistor 24 can be provided by a resistor that has resistance of 30 to 50 Ω, preferably of about 40 Ω. The discharging switch 23 is composed of two transistors Trₚ and Trₙ, and a resistor in the exemplary circuit shown in Fig. 2. Specifically, one end of the discharging resistor 24 is connected to the emitter side of the PNP transistor Trp. The base side of the PNP transistor Trₚ is connected to the collector side of the NPN transistor Trₙ. The collector side of the NPN transistor Trₙ is connected to the base side of the NPN transistor Trₙ. The base side of the NPN transistor Trₙ is connected to one end of the base resistor R_{B}. In this series connection circuit 22, the other end of the discharging resistor 24 is connected to the positive terminal side of a battery cell 2, and the other end of the base resistor R_{B} is connected to the negative terminal side of the battery cell 2. The node between the base of the PNP transistor Trₚ and the collector of the NPN transistor Trₙ serves as an input terminal to which a control signal from the control circuit 21 is provided. The series connection circuit 22 is connected to the positive and negative terminals of the battery cell 2 in parallel. The control signal is provided to the input terminal of the series connection circuit 22 from the control circuit 21. Thus, the series connection circuit 22 can start/stop forcedly discharging the battery cell 2. That is, when the control signal is provided, the PNP transistor Trₚ as the discharging switch 23 is turned ON so that a current can flows through the discharging resistor 24. As a result, the battery cell 2 can be discharged.

### (Control circuit 21)

The control circuit 21 detects a cell voltage of the battery cell. When this cell voltage of the battery cell becomes higher than the predetermined voltage, the control circuit 21 turns the discharging switch 23 of the series connection circuit 22 ON. The control circuit 21 includes a comparing circuit 25 that compares a cell voltage of the battery cell with a reference voltage. When this cell voltage becomes higher than the predetermined voltage, the comparing circuit 25 activates the series connection circuit 22. That is, the discharging switch 23 is turned ON so that the battery cell 2 stars being discharged.

### (Comparing Circuit 25)

The comparing circuit 25 is composed of a determining portion, and voltage dividing resistor R₁ and R₂. The determining portion determines whether a voltage is higher than a predetermined regulation voltage. The determining portion is provided with a voltage at a node between voltage dividing resistors R₁ and R₂ (i.e., divided voltage V₁). When this reference voltage becomes higher than a first predetermined value, an output voltage V₂ of the determining portion drops. That is, the divided voltages to be compared with the reference voltage is a voltage associated with this cell voltage (a voltage relating to a cell voltage). In this embodiment, a small amount of current will be discharged by the voltage dividing resistors R₁ and R₂ of the comparing circuit 25 from the battery cell. Accordingly, the battery cell will be constantly discharged even in normal operation. From this viewpoint, the voltage dividing resistors R₁ and R₂ have high resistance values. The voltage dividing resistors R₁ and R₂ with high resistance values can suppress the amount of discharging current so that this discharging current may not affect system operation.

A shunt regulator SR is preferably used as the determining portion. The shunt regulator SR detects cell voltage variation by using the voltage dividing resistors R₁ and R₂, and serves to drop the output voltage V₂ when a voltage becomes higher than predetermined regulation voltage. Also, a protection resistor R₃ is connected to the output side of the shunt regulator SR.

Operation of the forcedly discharging circuit 20 shown in Fig. 2 is now described with reference to the graph of Fig. 3. The voltage dividing resistors R₁ and R₂ are previously selected that allow a voltage V₁ obtained by the voltage dividing resistors R₁ and R₂ to exceed the first predetermined value when a cell voltage of the battery cell 2 exceeds a predetermined voltage Vₕ. Thus, when a cell voltage of the battery cell 2 becomes higher than the predetermined voltage Vₕ, the shunt regulator SR of the comparing circuit 25 determines that the divided voltage V₁ becomes higher than the first predetermined value, and provides a discharge start trigger to the forcedly discharging circuit 20. In this embodiment, when a current flows in the shunt regulator SR through the protection resistor R₃, the output voltage V₂ drops to a Low level so that the PNP transistor Trp is turned ON. As a result, a current starts flowing in the discharging resistor 24. Accordingly, the battery cell 2 is forcedly discharged through the discharging resistor 24, the PNP transistor Trp and the base resistor R_{B} so that the cell voltage decreases. Also, since a current flows in the base resistor R_{B}, a base voltage of the NPN transistor Trₙ rises so that the NPN transistor Trₙ is turned ON, and the output voltage V₂ will decrease. As a result, this can provide positive feedback, and can facilitate forcedly discharging the battery cell 2.

Even when a cell voltage of the battery cell 2 decreases and becomes lower than the predetermined voltage Vₕ, the forcedly discharging circuit 20 does not immediately stop but keeps forcedly discharging the battery cell 2. When the cell voltage of the battery cell 2 further decreases and reaches a second predetermined voltage Vₗ lower than the predetermined voltage Vₕ, the forcedly discharging circuit stops forcedly discharging the battery cell 2. That is, the determining portion is constructed to provide an ON control signal when the divided voltage V₁ becomes higher than a divided voltage (the first predetermined value) corresponding to the predetermined voltage Vₕ, and to provide an OFF signal when the divided voltage V₁ becomes lower than the divided voltage (the second predetermined value) corresponding to the second predetermined voltage Vₗ. In the case where lithium-ion rechargeable batteries are used as the cell batteries 2, the predetermined voltage Vₕ and the second predetermined voltage Vₗ in Fig. 3 can be specified at a value within the range of 4.5 to 5.0 V and a value within the range of 2.0 to 3.0 V, respectively.

Even if a battery cell is forcedly discharged, when its cell voltage decreases a safety voltage so that the battery cell recovers to a normal available state, the system is recovered and is allowed to operate again. Therefore, it is possible to provide a power supply device with improved practical utility. In this forcedly discharging circuit 20, which allows recovery of a battery cell, in the case where the activation voltage of the forcedly discharging circuit 20 is specified higher than the activation voltage of the current interception portion that starts operating when a cell voltage rises to an abnormal voltage in that the battery cell cannot recover, the battery cell can be flexibly controlled in accordance with the deference between the cell voltage of the battery cell 2 and the normal voltage. Therefore, the battery cell can be differently controlled in consideration both of safety and practical utility. That is, the forcedly discharging circuit 20 starts operating at a voltage lower than the cell voltage at which the current interception portion such as CID 9 that, once operating, puts a battery cell out of use so as not to allow this battery cell to operate again. Accordingly, in relatively non-serious failure, it can be determined that the battery cell may recover. The forcedly discharging circuit 20, which allows a battery cell to recover, tries forcedly discharging the battery cell. If a cell voltage of the battery cell does not decrease but rises higher, the current interception portion forcedly interrupts a current of the battery cell, and puts the battery cell out of use. As a result, the power supply device can assure safety. This two-step control meets both long use requirement and safety requirement.

The determining portion is not limited to the shunt regulator, but can be composed of a Zener diode ZD. In this case, as shown by a forcedly discharging circuit 20B in Fig. 4, a comparing circuit 25B can be included. Alternatively, as shown by a forcedly discharging circuit 20C in Fig. 5, a determining portion of a comparing circuit 25C can be included that is composed of a differential amplifier OP. In an exemplary circuit shown in Fig. 5, a reference power supply is connected to a first input terminal (negative side in the case of Fig. 5) of the differential amplifier OP, while the divided voltage V₁ relating to a cell voltage is provided to a second input terminal (positive side in the case of Fig. 5) of the differential amplifier OP. When the divided voltage V₁ exceeds a predetermined voltage, the base potential of a transistor connected to the differential amplifier OP will rise so that a collector current Increases. Thus, the differential amplifier OP can provide a signal for turning the discharging switch 23 ON.

As discussed above, the forcedly discharging circuit is composed of an analog circuit. In addition, the aforementioned operations are performed by hardware. In other words, since software operations are not included, the power supply device can stably operate and can have improved noise resistance. Circuit elements that compose the analog circuit are preferably composed of discrete elements. In this case, the robustness of the circuit can be improved.

### (Forced-Discharge Informing Portion 30)

The power supply device can include forced-discharge informing portions 30 that provide forced discharging operating states of the forcedly discharging circuits 20. Figs. 6 and 7 show a power supply device according to a modified embodiment. The forced-discharge informing portion 30 is connected to the discharging switch 23, and externally provides information that the battery cell 2 is forcedly discharged. In this embodiment, the forced-discharge informing portion 30 is composed of a photocoupler. A light emitting diode of the forced-discharge informing portion 30 on the input side is serially connected to the PNP transistor Trₚ of the discharging switch 23. The collector side and the emitter side of the transistor on the output side are connected to an output side and the grounded side, respectively. Thus, when the discharging switch 23 is turned ON, the photocoupler can provide an ON signal for externally informing that the battery cell 2 becomes in a voltage abnormal state. Needless to say, although the forced-discharge informing portion 30 is connected between the collector side of the PNP transistor Trₚ as the discharging switch 23 and the base resistors R_{B} in the case of Fig. 6, the forced-discharge informing portion can be connected between the emitter side of the PNP transistor Trp and the discharging resistor.

In a power supply device 100D shown in Fig. 7, each of the forced-discharge informing portions 30 is connected to each of the battery cells 2. The output signal terminals of the forced-discharge informing portions 30 are connected to the control portion 8. According to this power supply device 100D, the control portion 8 can be informed that one of the battery cells 2 is forcedly discharged, in other words, that a voltage of one of the battery cells 2 abnormally rises. The control portion 8 can take actions, for example, limiting a charging/discharging current, or informing users that service is required.

### (Equalization Circuit 40)

A part of the forcedly discharging circuit can also serve as an equalization circuit that keeps the balance among the plurality of battery cells. Figs. 8, 9 and 10 show a power supply device according to a modified embodiment. Fig. 8 is a block diagram showing an equalization circuit 40 and a plurality of forcedly discharging circuits 20 of battery cells 2 that are connected to each other. Fig. 9 is a circuit diagram showing the equalization circuit 40 and the forcedly discharging circuit 20 that includes the series connection circuit 22 of the battery cell connected to the equalization circuit 40. Fig. 10 is a block diagram showing a power supply device 100E that includes the equalization circuit 40. In the power supply device shown in Fig. 9, the output terminal of the equalization circuit 40 is connected to the common node with the control output terminal of the control circuit 21. The equalization circuit 40 also controls the discharging switch 23 of the series connection circuit 22, and forcedly discharges the battery cell 2 so as to keep the balance of the battery cells 2.

The equalization circuit 40 reduces the unbalance among the serially-connected battery cells by balancing operation in that cell voltages of the battery cells 2 are equalized. Ideally, the equalization circuit 40 detects a voltage of each of the battery cells 2 as the cell voltage, and reduces the unbalance among the cell voltages of the battery cells 2. However, the power supply device can include battery modules each of which is composed of a plurality of batteries are serially connected to each other, and can detect a voltage of each battery module as the cell voltage for reducing the unbalance among voltages of the battery modules. In the power supply device that includes the battery cells 2 of lithium-ion rechargeable batteries, the cell voltage is detected as a voltage of one battery. In the power supply device that includes batteries of nickel metal hydride batteries or nickel-cadmium batteries, this power supply device includes battery modules each of which is composed of a plurality of batteries are serially connected to each other, and detects a voltage of each battery module as the cell voltage for reducing the unbalance among voltages of the battery modules.

The power supply device 100E shown in Fig. 10 includes the battery pack 10, and the equalization circuit 40. The battery pack 10 includes a plurality of battery cells 2 that are serially connected to each other. The equalization circuit 40 equalizes voltages of the battery cells 2, which composes the battery pack 10. The equalization circuit 40 discharges a battery cell 2 with higher voltage through the discharging resistor 24 whereby reducing the unbalance of battery cells. However, the equalization circuit in the present invention is not limited to a circuit that discharges a battery through the discharging resistor. For example, the equalization circuit can discharge a battery with higher voltage to an accumulator such as capacitor and battery, and then discharges the accumulator to other battery with lower voltage whereby reducing the voltage difference among the batteries.

The equalization circuit 40 shown in Figs. 9 and 10 includes the series connection circuit 22, the cell voltage detecting circuit 4, and a cell control circuit 41. Each of the discharging resistors 24 is composed of the series connection circuit 22 and the discharging switch 23. The cell voltage detecting circuit 4 detects cell voltages. The cell control circuit 41 controls ON/OFF switching operation of the discharging switches 23 in accordance with the cell voltages detected by the cell voltage detecting circuit 4. Each of the series connection circuits 22 composed of the discharging resistor 24 and the discharging switch 23 is connected in parallel to corresponding one of the battery cells 2 of the battery pack 10. In the equalization circuit 40, when a cell voltage of a battery cell 2 becomes higher, the cell control circuit 41 turns the discharging switch 23 of this battery cell 2 ON so that this battery cell 2 is discharged through the discharging resistor 24. As a result, a voltage of the battery cell 2 decreases.

The cell voltage detecting circuit 4 includes differential amplifiers 42 that detect cell voltages of the battery cells 2. The battery pack 10 supplies electric power to the differential amplifiers 42. For example, the battery pack 10 can supply the differential amplifiers 42 with electric power with a voltage reduced by a DC/DC converter (not shown). According to this circuit construction, in the case where the voltage of the battery pack 10 is high, the battery pack 10 can supply the differential amplifiers 42 with electric power with optimum voltage. However, electric power may be supplied to the differential amplifiers from a vehicle-side battery. In the illustrated cell voltage detecting circuit 4, in order to detect cell voltages of the battery cells 2, each of input terminals 43 of the differential amplifiers 42 is connected to corresponding one of the battery cells 2. However, a switching circuit (not shown) may be connected on the input side of the differential amplifier so that battery cell can be selectively connected to the cell voltage detecting circuit. The output signal of the differential amplifier 42 is provided to the cell control circuit 41 via a multiplexer 44. The multiplexer 44 selectively provides the output signals of the differential amplifiers 42 to the cell control circuit 41 one after another.

The cell control circuit 41 compares cell voltages of the battery cells 2 provided from the multiplexer 44 with each other, and control the discharging switches 23 so as to equalize cell voltages of the battery cells 2. As for the discharging switch 23 of the series connection circuit 22 connected to one of the battery cells 2 the cell voltage of which is too high, the cell control circuit 41 turns this discharging switch 23 ON so that the one of battery cells 2 is discharged. A cell voltage of the battery cell 2 decreases as being discharged. This discharging switch 23 is turned from ON to OFF, when a cell voltage of the one of battery cells 2 decreases to a voltage that balances with other battery cells 2. When this discharging switch 23 is turned OFF, the one of the battery cells 2 stops being discharged. Thus, the cell control circuit 41 discharges one of the battery cells 2 with higher cell voltage whereby keeping the balance among cell voltages of all the battery cells 2.

Although, in the foregoing embodiment, the power supply device has been illustratively described that includes the single battery pack 10 having the equalization circuit 40, the power supply device can include a plurality of serially-connected battery packs 10 each of which has the equalization circuit 40 whereby reducing the unbalance of all the battery cells of the battery packs.

As discussed above, the power supply device includes an equalization circuit that detects the voltage difference among the battery cells, and equalizes voltages of the battery cell. The equalization circuit controls the discharging switches of the forcedly discharging circuits, which allow a current to flow through the discharging resistors, so as to equalize voltages of the battery cells. According to this construction, since the equalization circuit and the forcedly discharging circuit can commonly include members for forcedly discharging battery cells, the circuit construction can be simplified.

The vehicle power supply device can be installed on electric vehicles such as hybrid cars that are driven by both an engine and a motor, and electric vehicles that are driven only by a motor. The power supply device can be used as a power supply device for these types of vehicles.

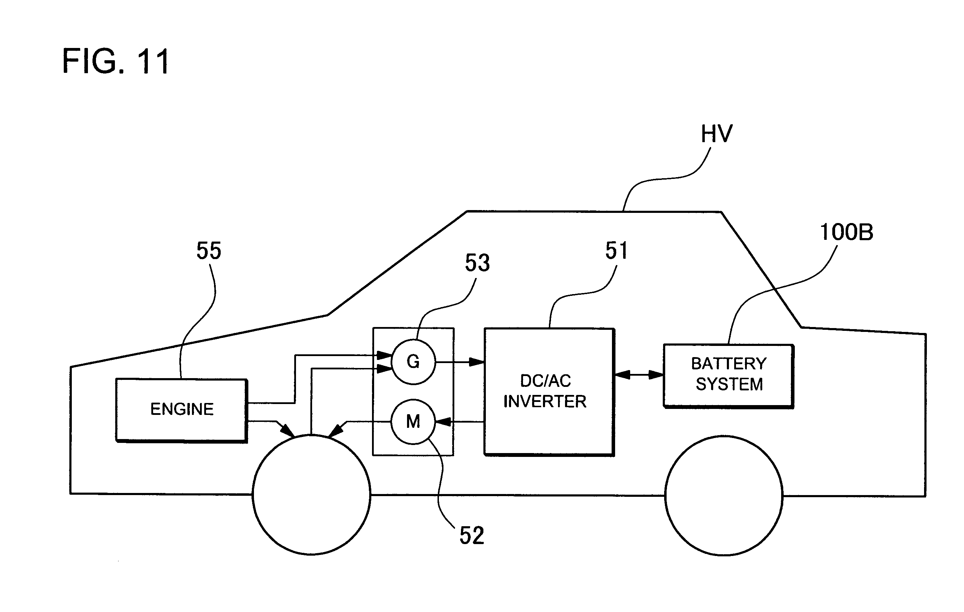

Fig. 11 is a block diagram showing an exemplary hybrid car that is driven both by an engine 55 and an electric motor 52, and includes the vehicle power supply device 100. The illustrated vehicle HV includes the electric motor 52 and the engine 55 that drive the vehicle HV, the vehicle power supply device 100B that supplies electric power to the electric motor 52, and an electric generator 53 that charges batteries of the vehicle power supply device 100B. The vehicle power supply device 100B is connected to the electric motor 52 and the electric generator 53 via a DC/AC inverter 51. The vehicle HV is driven both by the electric motor 52 and the engine 55 with the batteries of the vehicle power supply device 100B being charged/discharged. The electric motor 52 is energized and drives the vehicle in a poor engine efficiency range, e.g., in acceleration or in a low speed range. The electric motor 52 is energized by electric power is supplied from the vehicle power supply device 100B. The electric generator 53 is driven by the engine 55 or by regenerative braking when users brake the vehicle so that the batteries of the vehicle power supply device 100B are charged.

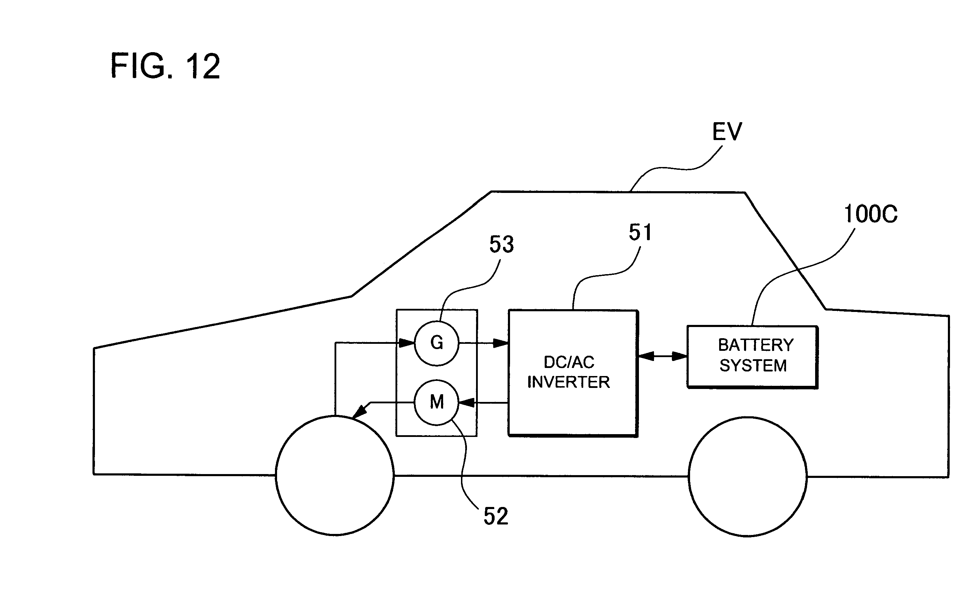

Fig. 12 shows an exemplary electric vehicle that is driven only by an electric motor 52, and includes the vehicle power supply device 100C. The illustrated vehicle EV includes an electric motor 52 that drives the vehicle EV, the vehicle power supply device 100C that supplies electric power to the electric motor 52, and an electric generator 53 that charges batteries of the vehicle power supply device 100C. The electric motor 52 is energized by electric power is supplied from the vehicle power supply device 100C. The electric generator 53 can be driven by vehicle EV regenerative braking so that the batteries of the vehicle power supply device 100C are charged.

### Industrial Applicability

A power supply device according to the present invention can be suitably applied to power supple devices of plug-in hybrid vehicles and hybrid electric vehicles that can switch between the EV drive mode and the HEV drive mode, electric vehicles, and the like.

## Claims

1. A power supply device comprising:
a battery pack(10) that includes a plurality of rechargeable battery cells (2) serially connected to each other; and
forcedly discharging circuits (20) that are connected to the battery cells (20) in parallel so that, when a cell voltage of a battery cell among the battery cells (2) becomes higher than a predetermined voltage, this battery cell is forcedly discharged,
**characterized in that:**
said forcedly discharging circuits (20) are composed of analog circuits, when a cell voltage of a battery cell becomes higher than the predetermined voltage, one of said forcedly discharging circuits (20) corresponding to this battery cell forcedly discharges this battery cell.

2. The power supply device according to claim 1, wherein each of said forcedly discharging circuits (20) comprises
a series connection circuit (22) that includes a discharging switch (23) and a discharging resistor (24) serially connected to each other, and
a control circuit (21) that detects a cell voltage of corresponding one of the battery cells, and, when a cell voltage of the corresponding one of the battery cells becomes higher than the predetermined voltage, turns the discharging switch (23) of said series connection circuit (22) ON,
wherein said series connection circuit (22) is connected to the corresponding one of the battery cells (2) in parallel,
wherein when a cell voltage of the corresponding one of the battery cells, which is connected to said series connection circuit (22) in parallel, becomes higher than the predetermined voltage, said control circuit (21) turns said discharging switch (23) ON and forcedly discharges the corresponding one of the battery cells (2) the cell voltage of which becomes higher than the predetermined voltage.

3. The power supply device according to claim 2, wherein said control circuit (21) includes a comparing circuit (25) that compares a voltage relating to a cell voltage of the corresponding one of the battery cells with a predetermined regulation voltage, wherein when a cell voltage of the corresponding one of the battery cells becomes higher than the predetermined voltage, the comparing circuit (25) turns the discharging switch (23) ON.

4. The power supply device according to claim 3, wherein said comparing circuit (25) includes a determining portion that specifies the predetermined regulation voltage, wherein said comparing circuit (25) compares the predetermined regulation voltage of said determining portion with a voltage relating to a cell voltage of the corresponding one of the battery cells, and, when this cell voltage of becomes higher than the predetermined regulation voltage of said determining portion, and provides a signal for turning the discharging switch (23) ON.

5. The power supply device according to claim 4, wherein said voltage relating to a cell voltage is a voltage obtained by dividing this cell voltage by voltage dividing resistors.

6. The power supply device according to claim 4 or 5, wherein said determining portion is a shunt regulator (SR) or a Zener diode (ZD).

7. The power supply device according to claim 4, wherein said determining portion comprises
a differential amplifier (OP) that has first and second input terminals, and
a reference power supply that is connected to the first input terminal of said differential amplifier (OP),
wherein said differential amplifier (OP) applies the voltage relating to a cell voltage to the second input terminal,
wherein when the voltage relating to a cell voltage becomes higher than the predetermined regulation voltage, said differential amplifier (OP) provides the signal for turning the discharging switch (23) ON.

8. The power supply device according to any of claims 1 to 7 further comprising forced-discharge informing portions (30) that provide forced discharging operating states of said forcedly discharging circuits (20).

9. The power supply device according to claim 8, wherein said forced-discharge informing portion (30) is composed of a photocoupler, wherein a light emitting diode of said photocoupler is serially connected to said discharging switch (23), wherein when said discharging switch (23) is turned ON, said photocoupler provides an ON signal.

10. The power supply device according to any of claims 1 to 9, whereinwhen a cell voltage of a battery cell becomes higher than the predetermined voltage, one of said forcedly discharging circuits (20) corresponding to this battery cell starts forcedly discharging this battery cell, and when a cell voltage of this battery cell decreases to a voltage lower than a second predetermined voltage, the one of said forcedly discharging circuits (20) corresponding to this battery cell stops discharging this battery cell.

11. The power supply device according to claim 10, wherein each of said battery cells (2) includes a current interception portion that interrupts a current when its cell battery becomes higher than a predetermined voltage, wherein the predetermined voltage at which the discharging switch (23) of said forcedly discharging circuit (20) is turned ON is lower than the predetermined voltage at which said current interception portion interrupts a current.

12. The power supply device according to any of claims 1 to 11, wherein an equalization circuit (40) is provided that detects the voltage difference among the battery cells (2), and equalizes voltages of the battery cells (2), wherein said equalization circuit (40) controls the discharging switches (23) of said series connection circuits (22) for equalizing voltages of the battery cells (2).

13. The power supply device according to any of claims 1 to 12, wherein said forcedly discharging circuits (20) are analog circuits composed of discrete elements.
